# EUROPÄISCHE PATENTSCHRIFT

(11) **EP 0 870 705 B1**
(45) Veröffentlichungstag und Bekanntmachung des Hinweises auf die Patenterteilung: **03.07.2002**
(21) Anmeldenummer: 98105576.7
(22) Anmeldetag: 27.03.1998
(51) Int. Cl.: B65G 65/48, B65D 88/68

(54) **Behälter für die Lagerung und dosierte Austragung von Holzteilchen, wie Holzspäne, Hackschnitzel und Sägemehl**
Container for storing and metered dispensing of wood particles such as chips, splinters and sawdust
Conteneur pour le stockage et la distribution dosée de particules de bois telles que copeaux, éclats et sciure

(30) Priorität: 08.04.1997 DE 29706169 U
(43) Veröffentlichungstag der Anmeldung: 14.10.1998
(73) Patentinhaber: KOCH TRANSPORTTECHNIK GmbH, 66787 Wadgassen (DE)
(72) Erfinder: Krystkiewicz, Wieslaw, 66740 Saarlouis (DE)
(74) Vertreter: Bernhardt, Winfrid, Dr.-Ing.

(56) Entgegenhaltungen:
- EP-A- 0 241 884
- DE-A- 2 603 964
- DE-A- 3 607 786
- FR-A- 2 247 603

## Beschreibung

Die Erfindung betrifft einen Behälter für die Lagerung und dosierte Austragung von Holzteilchen, insbesondere Holzspänen, Hackschnitzeln und Sägemehl, mit einer am Behälterboden angeordneten Austragseinrichtung, die einen über dem Behälterboden drehbaren Flügelrotor und wenigstens eine in dem Behälterboden vorgesehene Austragsöffnung umfaßt, wobei der Flügelrotor unterschiedlich lange, mit Schneiden versehene Flügel aufweist.

Es sind insbesondere als Puffereinrichtungen zur Zwischenlagerung der Holzteilchen dienende Behälter bekannt, in denen der Flügelrotor durch zwei sich spiralförmig von einer Drehachse erstreckende Federteile gebildet ist. Die Federteile sind entgegen ihrer Drehbewegungsrichtung abgebogen und können je nach Konsistenz der über dem Behälterboden durch den Flügelrotor aufzulockernden und der Austragsöffnung zuzuführenden Holzteilchen unter Verringerung des Rotordurchmessers nachgeben. Setzen die Teilchen dem Rotor einen großen Widerstand entgegen, so wird durch diese Verringerung des Rotordurchmessers das zur Drehung des Flügelrotors erforderliche Drehmoment verringert und damit ggf. ein Stillstand oder Durchbrennen eines zum Antrieb des Flügelrotors verwendeten Motors verhindert. Die genannten Federteile unterliegen einer schnellen Ermüdung und müssen daher häufig unter entsprechend hohem Arbeitsaufwand und Verursachung von Stillstandszeiten der Behältervorrichtung gewechselt werden.

Ein Behälter mit den eingangs erwähnten Merkmalen geht aus der DE-A-26 03 964 hervor. Dieser bekannte Behälter weist einen Flügelrotor mit einem langen und mehreren kleinen Flügeln auf. Die Flügel sind in bezug auf sich radial zur Drehachse des Flügelrotors erstreckende Achsen symmetrisch ausgebildet. Bei einem solchen Flügelrotor ist einerseits das zu seiner Drehung erforderliche Drehmoment verringert, indem die Flügellänge teilweise verkürzt ist.

Es ist die Aufgabe der Erfindung, einen gegenüber diesem Stand der Technik verbesserten, neuen Behälter mit einem die Holzteilchen effizienter austragenden Flügelrotor zu schaffen.

Der diese Aufgabe lösende Behälter nach der Erfindung ist dadurch gekennzeichnet, daß einer der Flügel einen in Richtung seiner Drehbewegung abgebogenen Flügelabschnitt aufweist, und daß sich die Schneide dieses Flügels radial etwa bis zu dem abgebogenen Flügelabschnitt erstreckt.

Durch eine solche äußere Abbiegung eines der Flügel wird im Zusammenwirken mit der sich bis zu der Abbiegung erstreckenden Schneide eine effiziente Zuförderung von Holzmaterial zu der Austragsöffnung erreicht, wobei insbesondere im Behälterrandbereich gelagerte Holzteilchen erfaßt und zum Behälterinneren hin und letztlich der Austragsöffnung zugefördert werden. Durch die Schneiden wird dafür gesorgt, daß die Flügel auch fest zusammengebackene Holzteilchen durchdringen, entsprechend auflockern, bewegen und so der Austragsöffnung zuführen können.

In einer bevorzugten Ausführungsform der Erfindung reicht einer der Flügel bis nahe an die Behälterseitenwand heran, wobei dieser Flügel über die insbesondere rillenartig ausgebildete Austragsöffnung hinausreicht, und ein anderer Flügel erstreckt sich wenigstens bis an den der Flügeldrehachse zugewandten Rand der Austragsöffnung. Insbesondere sind zwei sich entgegengesetzt von der Flügeldrehachse erstreckende Flügel vorgesehen, von denen ein Flügel etwa doppelt so lang wie der andere ist.

In einer weiteren bevorzugten Ausführungsform ist vorgesehen, daß dem Behälterboden zugewandte Flügelschneidenflächen sich etwa parallel oder leicht geneigt zum Behälterboden erstrecken und die dem Behälterboden abgewandten Flügelschneidenflächen zum Behälterboden, insbesondere etwa im Winkel von 30°, geneigt sind. Mit in dieser Weise ausgebildeten Schneiden läßt sich ein störungsfreier und besonders gleichmäßiger Rotorlauf bei guter Auflockerung und Austragung der Holzspäne über die Austragsöffnung erzielen.

Bevorzugt weisen die Schneiden eine gerade Schneidkante auf, wobei sich diese Schneidkanten vorzugsweise entlang zueinander parallel verlaufender Linien erstrecken.

In einer weiteren bevorzugten Ausführungsform der Erfindung ist vorgesehen, daß der Flügel von einem sich von der Rotordrehachse erstreckenden, etwa geraden Flügelteil abgebogen ist, wobei vorzugsweise die vertikale Flügeldicke des abgebogenen Flügelteils in radialer Richtung abnimmt. Durch die Verringerung der vertikalen Dicke des abgebogenen Flügelteils wird verhindert, daß durch diesen radial weit außensitzenden Flügelteil ein besonders hoher Beitrag zum für die Drehung des Rotors erforderlichen Drehmoment geliefert wird.

Während sich die Schneidkante des den abgebogenen Flügelteil aufweisenden Flügels nur etwa bis zu diesem abgebogenen Flügelteil erstreckt, verläuft die Schneidkante des kürzeren Flügels vorzugsweise über dessen gesamte Flügellänge.

In weiterer vorteilhafter Ausgestaltung der Erfindung ist vorgesehen, daß der Flügelrotor im Abstand über dem Behälterboden angeordnet ist, wobei dieser Abstand vorzugsweise im Bereich von 50 mm bis 200 mm liegt. Durch eine solche Anordnung des Flügelrotors im Abstand über dem Behälterboden wird eine besonders effiziente Materialaustragung erzielt, indem größtmögliche Materialmengen aufgelockert, bewegt und der Austragsöffnung zugefördert werden.

Die Austragungseffizienz wird ferner durch eine Flügelform begünstigt, bei der sich in der Draufsicht gesehen die Breite des Flügels ausgehend von der Rotordrehachse verringert und insbesondere der abgebogene Flügelteil spitz zuläuft.

In einer weiteren bevorzugten Ausführungsform der Erfindung sind zwei, insbesondere im Winkel zueinander angeordnete rillenartige Austragsöffnungen, unter denen Schneckentröge mit Förderschnecken angeordnet sind, vorgesehen.

Die Erfindung soll nun anhand eines Ausführungsbeispiel und der beiliegenden, sich auf dieses Ausführungsbeispiel beziehenden Zeichnungen näher erläutert und beschrieben werden. Es zeigen:
- Fig. 1: einen erfindungsgemäßen Behälter in einer seitlichen Schnittansicht,
- Fig. 2: ausschnittsweise eine in dem Behälter von Fig. 1 verwendbare Austragungseinrichtung nach der Erfindung in einer gemäß Schnittlinie A-A von Fig. 3 geschnittenen Seitenansicht,
- Fig. 3: die Austragungseinrichtung von Fig. 2 in einer Draufsicht.
- Fig. 4: eine Querschnittsansicht des in der Baugruppe gemäß den Fig. 2 und 3 verwendeten Flügelrotors gemäß der Schnittlinie B-B von Fig. 2,
- Fig. 5: einen Rotorflügelquerschnitt gemäß der Schnittlinie C-C von Fig. 2, und
- Fig. 6: einen Rotorflügelquerschnitt gemäß der Schnittlinie D-D von Fig. 2.

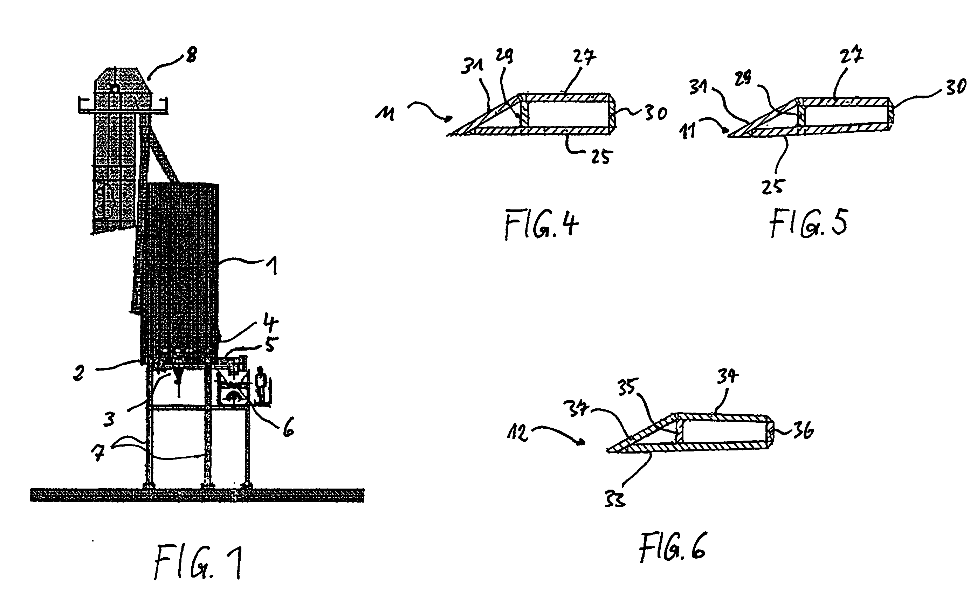

Mit dem Bezugszeichen 1 ist in der Fig. 1 ein Behälter für Holzteilchen, wie Sägespäne, Holzspäne und Hackschnitzel bezeichnet, über dessen Boden 2 ein durch einen Motor 3 getriebener Flügelrotor 4 angeordnet ist. In dem Behälterboden 2 ist ein zu dem Behälterinneren hin öffnender Schneckentrog 5 mit einem darin angeordneten, in der Fig. 1 nicht sichtbaren, Schneckenförderer vorgesehen. Über den Schneckentrog 5 mit dem Schneckenförderer werden Holzteilchen aus dem Behälter 1 auf ein Förderband 6 transportiert.

Der Behälter 1 ist auf einem Trägergestell 7 angeordnet. Mit dem Bezugszeichen 8 ist eine Teilchenzuführungseinrichtung zum Füllen des Behälters 1 bezeichnet.

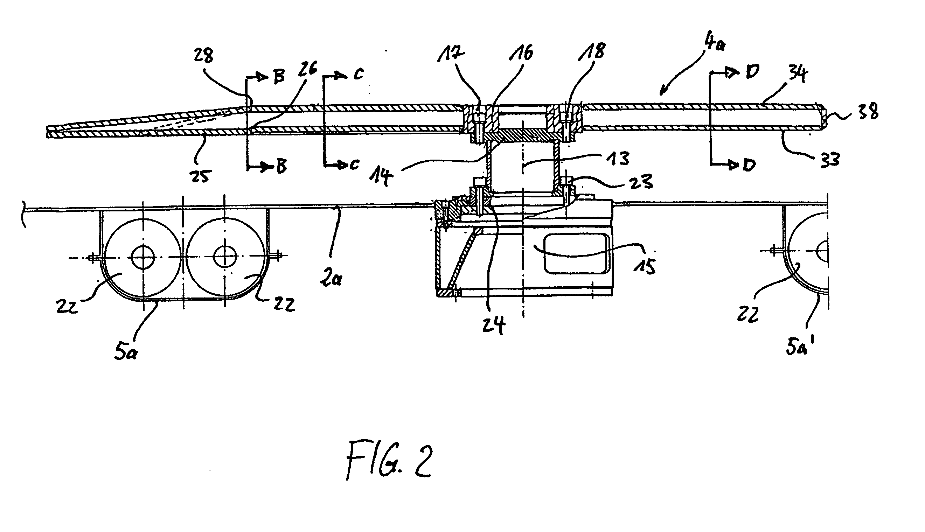

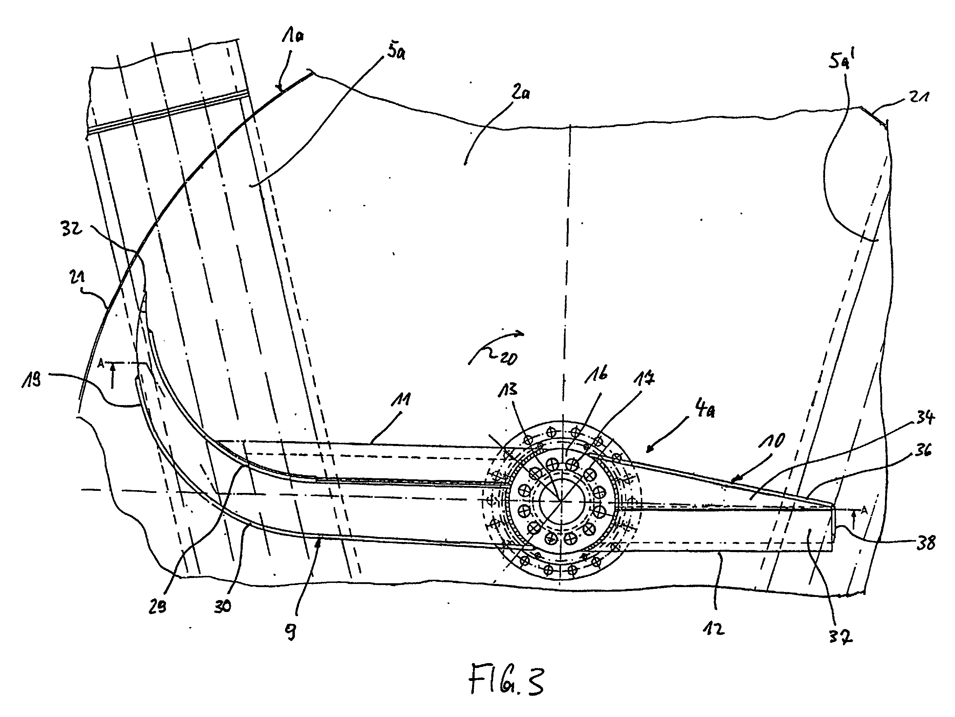

Es wird nun auf die Fig. 2 und 3 Bezug genommen, wo eine in dem Behälter von Fig. 1 verwendbare, einen Flügelrotor 4a aufweisende Austragseinrichtung dargestellt ist. Gleiche Teile sind in den Fig. 2 und 3 mit derselben, jedoch mit dem Buchstaben a versehenen Bezugszahl wie in der Fig. 1 bezeichnet.

Wie den Fig. 2 und 3 zu entnehmen ist, weist der im Abstand über einem Behälterboden 2a angeordnete Flügelrotor 4a einen langen Flügel 9 und einen kurzen Flügel 10 auf. Der Flügelrotor 4a ist drehbar um eine Achse 13 an einem Wellenzapfen 14 gehaltert, welcher in einer an dem Behälterboden 2a angebrachten Drehlagerung 15 drehbar ist. Eine zum Antrieb des Flügelrotors 4a verwendete Motorgetriebeeinheit ist in den Fig. 2 und 3 nicht dargestellt.

Der Flügelrotor 4a weist einen zentralen Trägerring 16 mit entlang einem Kreisumfang angeordneten Bohrungen 17 mit Sitzen für die Aufnahme von Schrauben 18 auf, über welche der Flügelrotor 4a an dem drehbar gelagerten Wellenzapfen 14 befestigt ist.

Der längere Flügel 9 weist eine Schneide 11 und der Flügel 10 eine Schneide 12 auf, wobei sich die Schneide 12 über die gesamte Länge des kürzeren Flügels 10 erstreckt.

Wie der Fig. 3 entnommen werden kann, nimmt die Breite der Flügel 9 und 10 mit wachsendem Abstand von der Drehachse 13 ab, wobei die Schneidkanten der Schneiden 11 und 12 sich jedoch entlang zueinander paralleler Linien erstrecken.

Wie insbesondere aus der Fig. 3 hervorgeht, weist der Flügel 9 einen abgebogenen Abschnitt 19 auf, dessen Breite in der Draufsicht von Fig. 3 in radialer Richtung abnimmt und welcher spitz zuläuft. Der in Richtung der Drehbewegung entsprechend einem gezeigten Pfeil 20 abgebogene Teil 19 reicht nahe an eine zylindrische Seitenwand 21 des Behälters heran und reicht in der in Fig. 3 gezeigten Draufsicht jeweils über Schneckentröge 5a, 5a' hinaus. Der kürzere Flügel 10 reicht in dem gezeigten Ausführungsbeispiel etwa nur bis zur Mitte der Schneckentröge 5a und 5a'.

Wie anhand der Fig. 2 zu erkennen ist, verringert sich in radialer Richtung die vertikale Dicke des abgebogenen Teils 19, wobei eine dem Behälterboden 2a zugewandte Flügelfläche sich parallel zum Behälterboden 2a erstreckt und die dem Behälterboden 2a abgewandte Flügelfläche zum Behälterboden 2a geneigt ist.

Mit dem Bezugszeichen 22 sind in der Fig. 2 in den Schneckentrögen 5a und 5a' angeordnete Schneckenförderer bezeichnet.

Das Bezugszeichen 23 weist in der Fig. 2 auf Schrauben hin, über welche der Wellenzapfen 14 seinerseits mit einem in der Drehlagerung 15 drehbar gelagerten Teil 24 verbunden ist.

Es wird nun vorrangig auf die Fig. 4 bis 6 Bezug genommen, die weiteren Aufschluß über den Aufbau des Flügelrotors 4a geben.

Mit dem Bezugszeichen 25 ist ein dem Behälterboden 2a zugewandter Flügelteil bezeichnet, welcher aus einem einstückig hergestellten Stahlplattenzuschnitt besteht und unter anderem mit dem Trägerring 16 verschweißt ist. Der Flügelteil 25 weist einen Knick 26 derart auf, daß seine dem Behälterboden 2a zugewandte Oberfläche zwischen diesem Knick 26 und dem Trägerring 16 leicht geneigt ist, während der übrige Teil der dem Behälterboden 2a zugewandten Oberfläche des Flügelteils 25 sich parallel zu dem Behälterboden 2a erstreckt.

Mit dem Bezugszeichen 27 ist ein Flügelteil des längeren Flügels 9 bezeichnet, das wie der Flügelteil 25 aus einem einstückigen Stahlplattenzuschnitt besteht. Der an einem Ende mit dem Trägerring 16 verschweißte Flügelteil 27 weist eine Knickstelle 28 auf, von welcher an etwa die Abbiegung des Flügels 9 beginnt und von welcher an die dem Behälterboden abgewandte Oberfläche des Flügels 9 unter Verringerung seiner vertikalen Dicke sich zu dem Behälterboden 2a hin geneigt erstreckt.

Die Flügelteile 25 und 27 sind über Vertikalstege 29 und 30 miteinander verschweißt, wobei der Vertikalsteg 30 eine Flügelseitenwand bildet.

Mit 31 ist ein weiterer Flügelteil bezeichnet, welcher zusammen mit dem Flügelteil 25 die Schneide 11 bildet und sowohl mit dem Flügelteil 27, dem Steg 29 und dem Flügelteil 25 verschweißt ist. Auch die Flügelteile 29 bis 31 sind einstückig als Stahlplattenzuschnitte hergestellt. Zur Bildung einer scharfen Schneidkante ist der Flügelteil 31 abgeschrägt, wobei die Abschrägungsfläche in der Ebene der dem Behälterboden 2a zugewandten Oberfläche des Flügelteils 25 liegt. Sämtliche Flügelteile des Flügels 9 sind untereinander und mit dem Trägerring 16 verschweißt.

Die Flügelteile 25 und 27 weisen an ihrem dem Trägerring 16 abgewandten Ende jeweils eine Abschrägung auf, um eine scharfe Spitze 32 am Ende des Flügels 9 zu bilden.

Mit dem Bezugszeichen 33 ist ein Flügelteil des kürzeren Flügels 10 bezeichnet, welcher dem Behälterboden 2a zugewandt und zum Behälterboden 2a wie ein Teil des Flügelteils 25 leicht, etwa unter einem Winkel zwischen 5 und 10°, geneigt ist. Oberhalb des Flügelteils 33 ist ein Flügelteil 34 angeordnet, der mit dem Flügelteil 33 über Stegteile 35 und 36 verbunden ist, wobei der Stegteil 36 eine Flügelseitenwand bildet. Mit 37 ist ein weiterer Flügelteil bezeichnet, der durch seine Neigung zusammen mit dem Flügelteil 33 die Schneide 12 bildet. Sämtliche Flügelteile sind einstückig als Stahlplattenzuschnitte hergestellt und sowohl untereinander als auch mit dem Trägerring 16 verschweißt. Wie der Flügelteil 31 weist auch der Flügelteil 37 zur Bildung einer scharfen Schneidkante eine Abschrägung auf.

Mit dem Bezugszeichen 38 ist eine Endabdeckung des kürzeren Flügels 10 bezeichnet, die mit dem Flügelteilen 33 bis 37 verschweißt ist.

Die Funktionsweise des anhand der Fig. 1 bis 6 dargestellten Behälters wird nun erläutert.

Über die Zuführungseinrichtung 8 in den Behälter 1 z.B. zur Zwischenspeicherung eingebrachte, sich am Behälterboden verdichtende Holzteilchen werden durch die Austragseinrichtung auf das Förderband 6 transportiert. Zum Austragen der Holzteilchen wird der Flügelrotor 4 bzw. 4a gedreht, wobei die Schneiden dafür sorgen, daß auch bei stark verdichteten Teilchen der Flügelrotor gegen den Widerstand der Teilchen drehbar ist, so daß er die Teilchenmasse auflockert, bewegt und so der Förderrinne 5 bzw. den Förderrinnen 5a und 5a' zufördert. Indem einer der beiden Flügel im Vergleich zum anderen verhältnismäßig kurz ist, wird das zur Drehung des Rotors gegen die Teilchen erforderliche Motordrehmoment zusätzlich verringert. Der abgebogene Teil 19 des Flügelrotors 4a sorgt für eine Umwälzung der Teilchen im Außenbereich des Behälters und eine effiziente Zuführung zu den Schneckentrögen. Indem der abgebogene Teil 19 in der Dicke verringert ist und eine Spitze aufweist, erhöht dieser Flügelabschnitt, obwohl er am weitesten von der Drehachse entfernt ist, das zur Drehung des Flügelrotors erforderliche Drehmoment nur verhältnismäßig wenig.

Durch die leichte Neigung eines Teils der dem Behälterboden zugewandten Flügeloberflächen und die starke Neigung der dem Behälterboden abgewandten, zur Bildung der Schneiden vorgesehenen Flügelflächen wird eine leichte Durchdringung des Holzmaterials bei gleichzeitig effizienter Förderbewegung der den Förderrinnen zuzuführenden Holzteilchen erreicht.

Indem der Abstand zwischen dem Flügelrotor und dem Behälterboden geeignet gewählt ist. können große Mengen von Holzmaterial durch den Flügelrotor bewegt und so die Austragseffizienz gesteigert werden.

## Patentansprüche

1. Behälter für die Lagerung und dosierte Austragung von Holzteilchen, insbesondere Holzspänen, Hackschnitzeln und Sägemehl, mit einer am Behälterboden (2,2a) angeordneten Austragseinrichtung, die einen über dem Behälterboden (2,2a) drehbaren Flügelrotor (4,4a) und wenigstens eine in dem Behälterboden vorgesehene Austragsöffnung umfaßt, wobei der Flügelrotor (4,4a) unterschiedlich lange, mit Schneiden (11,12) versehene Flügel (9,10) aufweist,
**dadurch gekennzeichnet,**
- **daß** einer der Flügel (9) einen in Richtung seiner Drehbewegung abgebogenen Flügelabschnitt (19) aufweist, und
- **daß** sich die Schneide (11) dieses Flügels (9) radial etwa bis zu dem abgebogenen Flügelabschnitt (19) erstreckt.

2. Behälter nach Anspruch 1,
**dadurch gekennzeichnet,**
**daß** einer der Flügel (9) etwa bis an die Behälterseitenwand (21) heranreicht.

3. Behälter nach Anspruch 1 oder 2,
**dadurch gekennzeichnet,**
**daß** in Draufsicht gesehen ein Flügel (10) wenigstens bis an den der Flügeldrehachse (13) zugewandten Rand eines unter der Austragsöffnung angeordneten Schneckentrogs (5a,5a') heranreicht und ein anderer Flügel (9) über den Schneckentrog (5a,5a') hinausreicht.

4. Behälter nach einem der Ansprüche 1 bis 3,
**dadurch gekennzeichnet,**
**daß** zwei sich entgegengesetzt von der Flügeldrehachse (13) erstreckende Flügel (9,10), von denen ein Flügel (9) ungefähr doppelt so lang wie der andere (10) ist, vorgesehen sind.

5. Behälter nach einem der Ansprüche 1 bis 4,
**dadurch gekennzeichnet,**
**daß** die dem Behälterboden (2a) zugewandten Flügelschneidenflächen sich etwa parallel zum Behälterboden oder leicht geneigt dazu, vorzugsweise im Winkel zwischen 5 und 10°, erstrecken und die dem Behälterboden abgewandten Flügelschneidenflächen zum Behälterboden, insbesondere etwa im Winkel von 30°, geneigt sind.

6. Behälter nach einem der Ansprüche 1 bis 5,
**dadurch gekennzeichnet,**
**daß** die Schneiden (11,12) gerade, vorzugsweise entlang zueinander paralleler Linien verlaufende Schneidkanten aufweisen.

7. Behälter nach einem der Ansprüche 1 bis 6,
**dadurch gekennzeichnet,**
**daß** der abgebogene Flügel (9) sich von einem etwa geraden Flügelteil erstreckt.

8. Behälter nach Anspruch 7,
**dadurch gekennzeichnet,**
**daß** die vertikale Flügeldicke des abgebogenen Flügelteils (19) in radialer Richtung abnimmt.

9. Behälter nach einem der Ansprüche 1 bis 8,
**dadurch gekennzeichnet,**
**daß** sich die Schneide (12) des kürzeren Flügels (10) über die gesamte Flügellänge erstreckt.

10. Behälter nach einem der Ansprüche 1 bis 9,
**dadurch gekennzeichnet,**
**daß** der Flügelrotor (4) im Abstand über dem Behälterboden (2) angeordnet ist.

11. Behälter nach Anspruch 10,
**dadurch gekennzeichnet,**
**daß** der Flügelrotor (4,4a) über dem Behälterboden (2) in einem Abstand von 50 mm bis 200 mm angeordnet ist.

12. Behälter nach einem der Ansprüche 6 bis 11,
**dadurch gekennzeichnet,**
**daß** sich in der Draufsicht gesehen die Breite der Flügel (9,10) ausgehend von der Flügeldrehachse (13) verringert und insbesondere der abgebogene Flügelteil (19) spitz zuläuft.

13. Behälter nach einem der Ansprüche 1 bis 12,
**dadurch gekennzeichnet,**
**daß** die Flügel (9,10) im wesentlichen einen aus einem Rechteck und einem die Schneide bildenden Dreieck zusammengesetzten Querschnitt aufweisen.

14. Behälter nach einem der Ansprüche 1 bis 13,
**dadurch gekennzeichnet,**
**daß** die Flügel (9,10) aus miteinander verschweißten Stahlplattenzuschnitten gebildet sind.

## Claims

1. Container for storing, and discharging in measured quantities, particles of wood, in particular wood chips, splinters and sawdust, having a discharging arrangement which is arranged on the container base (2, 2a) and comprises a vaned rotor (4, 4a), which can be rotated above the container base (2, 2a), and at least one discharge opening provided in the container base, the vaned rotor (4, 4a) having vanes (9, 10) which are of different lengths and are provided with cutting edges (11, 12),
**characterized**
- **in that** one of the vanes (9) has a vane portion (19) which is curved in the direction of its rotary movement, and
- **in that** the cutting edge (11) of said vane (9) extends radially approximately as far as the curved vane portion (19).

2. Container according to Claim 1, **characterized in that** one of the vanes (9) extends approximately as far as the side wall (21) of the container.

3. Container according to Claim 1 or 2, **characterized in that**, as seen in plan view, one vane (10) extends at least as far as that border of a screw trough (5a, 5a'), arranged beneath the discharge opening, which is directed towards the axis of rotation (13) of the vanes, and another vane (9) extends beyond the screw trough (5a, 5a').

4. Container according to one of Claims 1 to 3, **characterized in that** two vanes (9, 10) are provided, these extending in opposite directions from the axis of rotation (13) of the vanes and one vane (9) being approximately double the length of the other (10).

5. Container according to one of Claims 1 to 4, **characterized in that** the cutting-edge surfaces of the vanes which are directed towards the container base (2a) extend approximately parallel to the container base or in a slightly inclined manner in relation to the same, preferably at an angle of between 5 and 10°, and the cutting-edge surfaces of the vanes which are directed away from the container base are inclined in relation to the container base, in particular approximately at an angle of 30°.

6. Container according to one of Claims 1 to 5, **characterized in that** the cutting edges (11, 12) are rectilinear and preferably run along mutually parallel lines.

7. Container according to one of Claims 1 to 6, **characterized in that** the curved vane (9) extends from an approximately rectilinear vane part.

8. Container according to Claim 7, **characterized in that** the vertical vane thickness of the curved vane part (19) decreases in the radial direction.

9. Container according to one of Claims 1 to 8, **characterized in that** the cutting edge (12) of the shorter vane (10) extends over the entire vane length.

10. Container according to one of Claims 1 to 9, **characterized in that** the vaned rotor (4) is arranged at a distance above the container base (2).

11. Container according to Claim 10, **characterized in that** the vaned rotor (4, 4a) is arranged at a distance of from 50 mm to 200 mm above the container base (2).

12. Container according to one of Claims 6 to 11, **characterized in that**, as seen in plan view, the width of the vanes (9, 10) decreases from the axis of rotation (13) of the vanes, and the curved vane part (19) in particular tapers to a point.

13. Container according to one of Claims 1 to 12, **characterized in that** the vanes (9, 10) essentially have a cross section which is made up of a rectangle and of a triangle which forms the cutting edge.

14. Container according to one of Claims 1 to 13, **characterized in that** the vanes (9, 10) are formed from steel-plate blanks which are welded to one another.

## Revendications

1. Récipient pour l'entreposage et l'évacuation dosée de particules de bois, en particulier de copeaux de bois, de particules hachées et de sciure de bois, présentant un dispositif d'évacuation disposé au niveau du fond (2, 2a) du récipient, qui comprend un rotor à ailettes (4, 4a) rotatif au-dessus du fond (2, 2a) du récipient et au moins une ouverture d'évacuation prévue dans le fond du récipient, le rotor à ailettes (4, 4a) présentant des ailettes (9, 10) de longueurs différentes, pourvues d'arêtes vives (11, 12), **caractérisé**
- **en ce que** l'une des ailettes (9) présente une section (19) d'ailette pliée dans le sens de son mouvement de rotation et
- **en ce que** l'arête vive (11) de cette ailette (9) s'étend de manière radiale environ jusqu'à la section (19) d'ailette pliée.

2. Récipient selon la revendication 1, **caractérisé en ce que** l'une des ailettes (9) s'étend jusqu'à atteindre environ la paroi latérale (21) du récipient.

3. Récipient selon la revendication 1 ou 2, **caractérisé en ce qu'**en vue du dessus, une ailette (10) s'étend au moins jusqu'à atteindre le bord, orienté vers l'axe de rotation (13) de l'ailette, d'une auge à vis sans fin (5a, 5a') disposée sous l'ouverture d'évacuation et une autre ailette (9) s'étend au-dessus de l'auge à vis sans fin (5a, 5a').

4. Récipient selon l'une quelconque des revendications 1 à 3, **caractérisé en ce qu'**on a prévu deux ailettes (9, 10) s'étendant de manière opposée à partir de l'axe de rotation (13) des ailettes, dont l'une ailette (9) a une longueur environ double de l'autre ailette (10).

5. Récipient selon l'une quelconque des revendications 1 à 4, **caractérisé en ce que** les surfaces des arêtes vives des ailettes orientées vers le fond (2a) du récipient s'étendent de manière environ parallèle au fond du récipient ou en étant légèrement inclinées vers ledit fond, de préférence d'un angle entre 5 et 10°, et les surfaces des arêtes vives des ailettes orientées en s'écartant du fond du récipient sont inclinées par rapport au fond du récipient, en particulier environ d'un angle de 30°.

6. Récipient selon l'une quelconque des revendications 1 à 5, **caractérisé en ce que** les arêtes vives (11, 12) présentent des bords d'arête vive droites, s'étendant de préférence le long de lignes qui sont parallèles l'une par rapport à l'autre.

7. Récipient selon l'une quelconque des revendications 1 à 6, **caractérisé en ce que** l'ailette pliée (9) s'étend à partir d'une partie d'ailette environ droite.

8. Récipient selon la revendication 7, **caractérisé en ce que** l'épaisseur verticale d'ailette de la partie (19) d'ailette pliée diminue dans le sens radial.

9. Récipient selon l'une quelconque des revendications 1 à 8, **caractérisé en ce que** l'arête vive (12) de l'ailette plus courte (10) s'étend sur toute la longueur de l'ailette.

10. Récipient selon l'une quelconque des revendications 1 à 9, **caractérisé en ce que** le rotor (4) à ailettes est disposé à une certaine distance au-dessus du fond (2) du récipient.

11. Récipient selon la revendication 10, **caractérisé en ce que** le rotor (4, 4a) à ailettes est disposé à une distance de 50 mm à 200 mm au-dessus du fond (2) du récipient.

12. Récipient selon l'une quelconque des revendications 6 à 11, **caractérisé en ce qu'**en vue du dessus, la largeur des ailettes (9, 10), partant de l'axe de rotation (13) de l'ailette, diminue et qu'en particulier la partie (19) d'ailette pliée se termine en pointe.

13. Récipient selon l'une quelconque des revendications 1 à 12, **caractérisé en ce que** les ailettes (9, 10) présentent une section essentiellement constituée d'un rectangle et d'un triangle formant l'arête vive.

14. Récipient selon l'une quelconque des revendications 1 à 13, **caractérisé en ce que** les ailettes (9, 10) sont formées à partir de pièces en tôle d'acier soudées l'une avec l'autre.
